# EUROPEAN PATENT APPLICATION

(11) **EP 2 108 602 A1**
(43) Date of publication of application: **14.10.2009**
(21) Application number: 08171244.0
(22) Date of filing: 10.12.2008
(51) Int. Cl.: B65G 45/12

(54) **Disposal of set of setting of blade of secondary scraper**

(30) Priority: 10.04.2008 BR MN8800788 U
(71) Applicant: Pentec Industrial Ltda, 34800-000 Minas Gerais (BR)
(72) Inventor: CAMARGOS, Vitorio Angelo G., 31950-540, Sabará (BR)
(74) Representative: Carpintero Lopez, Francisco

(57) **Abstract**

One is about a set of setting of blade of secondary scraper understanding a squared pipe internal of setting and a squared pipe external of setting. The external pipe receiving a ruler from setting of scraping door-blade. The internal and external squared pipes are fixed one to the other by means of screw and the ruler of setting of the blade clamp is welded to the external pipe of setting. The blade clamp, in turn is screwed to the setting ruler and the door-blade is fixed by screw to the blade clamp. The set is restrained in the position of work by means of limps horizontally bipartite.

## Description

### FIELD OF APPLICATION

The present model of utility relates in general to the secondary field of scrapers for mining mats and, in particular, scrapers.

### BACKGROUNDS

Secondary scrapers already are known in the state of the art. Most used nowadays they understand those mounted in a ruler settled to a horizontal round pipe and this settled in both the extremities the sustentation lame people. These lame people of sustentation of secondary scrapers are bipartite and to effect the substitution of the secondary scraping set the stop of the mat is necessary, therefore, when separating the two halves of the lame people, the round pipe is without sustentation for the substitution.

Also they are known scraping secondary double, for example, for the order of patent BR PI 0403621-2, published in 04/04/2006. In this order of patent the pipe of support of the scrapers also is round and the system of setting of the lame people similar to the described one in the previous paragraph.

### OBJECT OF THE INVENTION

The object of the asked for gift of patent is to present a set of setting of blade of secondary scraper who is of simpler manufacture and faster substitution of what the conventional of the state of the art.

### SUMMARY OF THE INVENTION

The clear gift understands a set of setting of blade of secondary scraper understanding a squared pipe internal of setting and a squared pipe external of setting. The external pipe receiving a ruler from setting of scraping door-blade. The internal and external squared pipes are fixed one to the other by means of screw and the ruler of setting of the blade clamp is welded to the external pipe of setting. The blade clamp, in turn is screwed to the setting ruler and the door-blade is fixed by screw to the blade clamp. The set is restrained in the position of work by means of limps horizontally bipartite.

### BRIEF DESCRIPTION OF THE FIGURES

Figure 1 is a blown up perspective sight of a secondary scraper of the state of the art.
Figure 2 is a sight frontal of the secondary scraper of the present model of utility.
Figure 3 is a sight frontal of the scraper of the present model of utility showing the squared pipes of support of the squared pipe that supports the blades scraping.
The Figure 3A is a sight in cut in the direction of the arrows TO It of Figure 3.
The Figure 3B is a lateral sight of the scraper shown in Figure 3 showing the setting of the squared pipes that compose the same.
The Figure 3C is a lateral sight of the scraping set of the present model of utility taken in the direction of the arrow 3D of Figure 2.
Figure 4 is a sight frontal of an alternative modality where the blades are installed directly in the squared pipe.
The Figure 4B is a sight in cut of the alternative modality of Figure 4 where the blade clamp is installed directly in the squared pipe, without using the external pipe of setting and the ruler of setting.

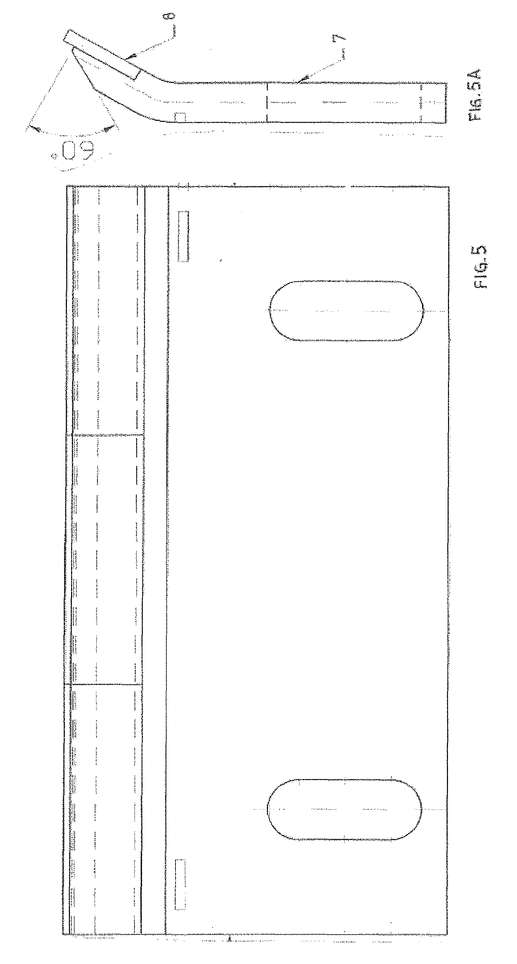

Figure 5 is a sight frontal of the blade for secondary scraper of the present model of utility.
The Figure 5A is a lateral sight of the blade for represented secondary scraper in Figure 5.
Figure 6 is a sight frontal of the clamp of scraping blade of the present model of utility.
The Figure 6A is a sight in cut TO It of the represented clamp of scraping blade in Figure 6.
The Figure 6B is a sight in cut B-B of the represented clamp of scraping blade in Figure 6.
Figure 7 is a lateral sight of the represented clamp of scraping blade in Figure 6.
Figure 8 is a sight frontal of the plate of setting of the scraping blade and the clamp of blade.

### DESCRIPTION OF THE PREFERRED EMBODIMENT

The present model will be described in details with regard to the Figures in annex.

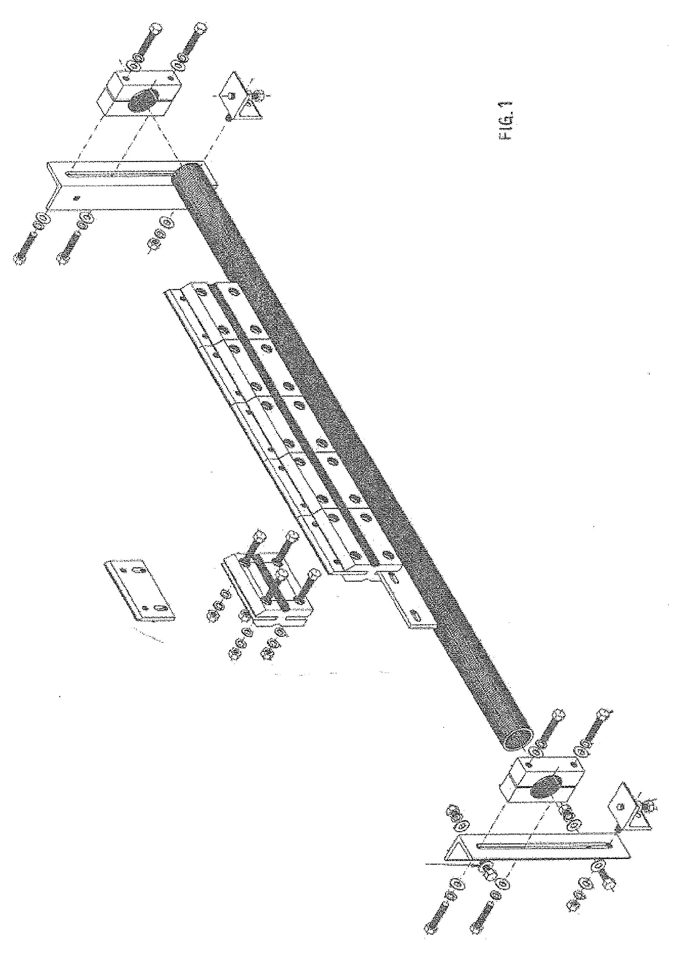

Figure 1 is a perspective sight of a secondary scraper of the state of the composed art of pipe of round support, vertically bipartite lame people and ruler of setting of the supports of scraping blade in welded plain part to the pipe of round support. This set is fixed by means of screws to the lame person support in angle-iron form with oblong rip. As already mentioned previously, this type of current setting is inconvenient of the point of view of installation, therefore, as already also mentioned, it has necessity to stop the mat to fix the new support of scraper.

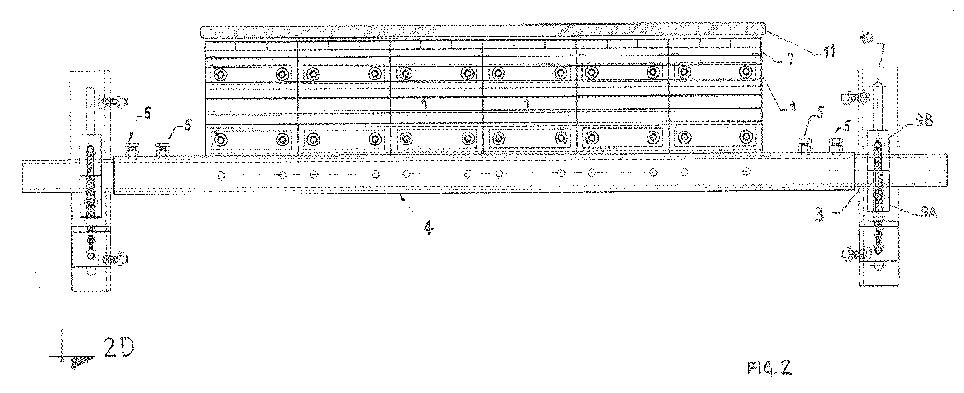

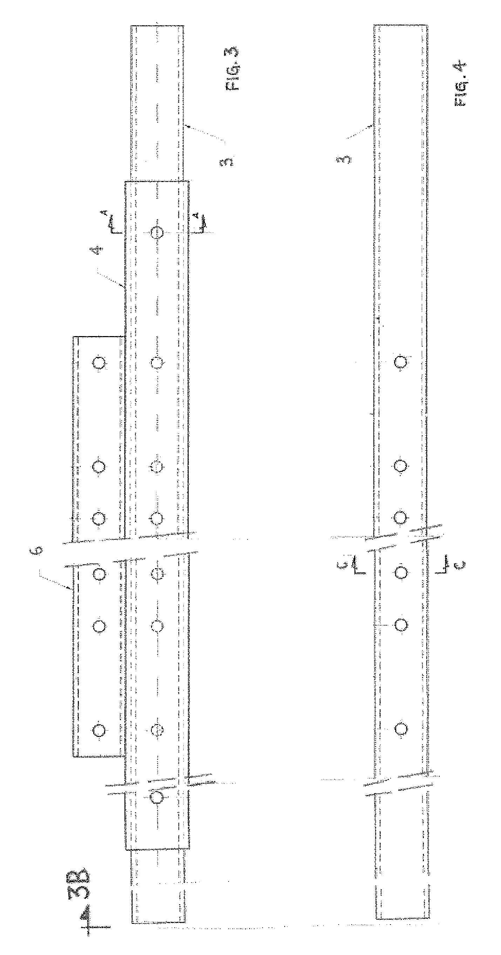

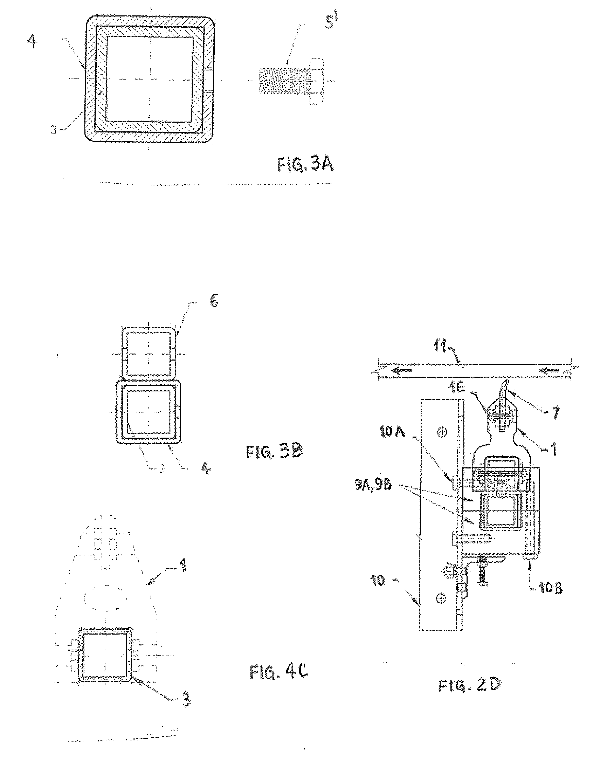

In Figure 2 the set of the secondary scraper of the present model duly installed in the horizontally bipartite lame person is shown 9A, 9B that in turn it is screwed to the support of pertaining lame person 10 to transporting mat 11. Such support of pertaining lame person 10 to the structure of transporting mat 11 will not be treated in the present report. In Figures 3 and 4, squared pipes 3, 4 are represented in interrupted way to facilitate the agreement. Such squared pipes are preferential of steel, however, any another adjusted alternative material to the mining industry are acceptable. The horizontally bipartite lame people 9A, 9B are screwed by the screws of setting 10A to support 10 of the transporting mat. They also are screwed one to the other for the setting screw 10B. The material of construction preferred for these bipartite lame people also is the steel, however, other adequate materials to the mining industry are acceptable.

Still in accordance with Figure 2, the external pipe of setting 4 is dimensioned in way that has certain distance of its extremities for the structure of the mat, being such changeable distance in function of each specific project. Internal pipe 3 is dimensioned in order to incase for its extremities in the bipartite lame person 9A, 9B. The pipe of internal setting 3 passes for the interior of the external pipe of setting 4 and the pipe of internal setting 3 is fixed in its position of work in the interior of the external pipe of setting 4 for the illustrated screws of retention 5 in Figure 2. Additionally, the pipe of internal setting the 3 and external pipe of setting 4 are joined together by means of screws 5' (to see Figure 3B). The external pipe of setting 4 receives in its external superior portion the ruler from setting 6 from the fixing from blade 1. The amount of these fixing of blade 1 in accordance with varies the width of each specific transporting mat. The ruler of setting 6 is welded to the external pipe of setting 4.

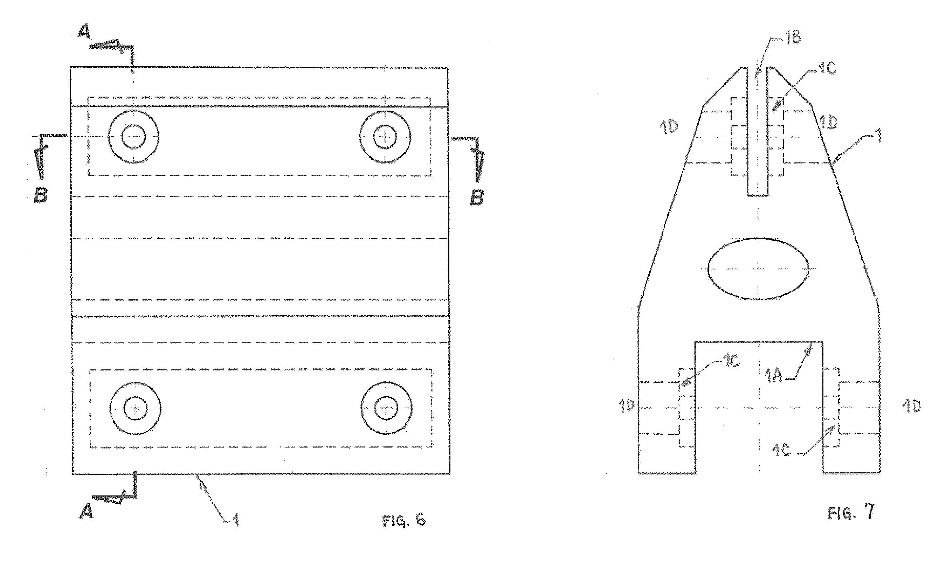

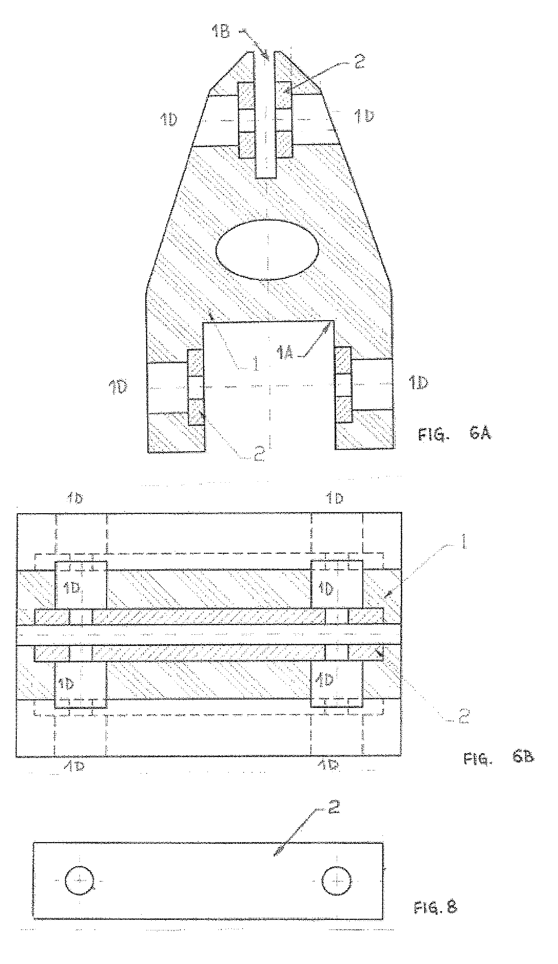

In accordance with Figures 6, 6A, 6B, and 7, the blade clamp consists of a body of in general trapezium format with an elliptical puncture in its intermediate portion, a squared recess 1A longitudinally continuous in its inferior portion and a longitudinally continuous rip 1B in its superior portion. The elliptical puncture has the purpose to provide flexibility to the set. The squared recess 1A in its vertical region and on both sides presents one lowers 1C for installation of the plate of setting 2 in number of two and passing punctures 1D. These passing punctures 1D have the purpose to receive the joint screw and nut 1E destined to the setting from door-blade 7 to the blade clamp, as illustrated in the Figure 2D. The rip 1B also presents in its vertical region and on both sides one I lower 1C for installation of the plate of setting 2 in number of two and passing punctures 1D. These punctures 1D have the purpose to receive the joint screw and nut 1E destined to the setting from the clamp of blade 1 to the ruler of setting 6, also as illustrated in the Figure 2D. This plate of separately represented setting 2 in Figure 8 is destined to provide to resistant support for the assembly of the door-blade and resistant support to it for the assembly of the clamp of blade 1 to the ruler of setting 6.

Figures the 5 and 5A preferential illustrate the door-blade of the present done model in steel plate, even so another material adequate equivalent to the mining industry are acceptable. In the superior extremity the door-blade is bending and has one lowers to receive blade scraping 8 from tungsten.

In Figure 4 the alternative of the described disposal in the gift also asked for is illustrated to directly contemplate the option of installation of the clamp of blade in the pipe of internal setting 3 excusing, of this form, the use of the external pipe of setting 4 and of the ruler of setting 6. This variation of construction is dependent of the specific requirements of each installation of mat.

## Claims

1. Disposal of set of setting of blade of secondary scraper, **characterized in that** it understands:
a squared pipe internal (3) of setting and a squared pipe external (4) of setting; where the squared pipe external (4) the same receives a ruler from joined setting (6) for weld;
screwed fixing of blade (1) to the setting ruler (6);
scraping door-blades (7) settled by screws to the setting ruler (6);
where the set of setting of blade of secondary scraper is restrained in the position of work by means of bipartite lame people horizontally (9A, 9B).
